# EUROPEAN PATENT APPLICATION

(11) **EP 2 348 769 A1**
(43) Date of publication of application: **27.07.2011**
(21) Application number: 09823087.3
(22) Date of filing: 30.10.2009
(51) Int. Cl.: H04W 28/16, H04L 12/24

(54) **METHOD AND DEVICE FOR IMPLEMENTING QoS PRE-AUTHORIZATION IN ROAMING SCENARIO**

(30) Priority: 30.10.2008 CN 200810217506
(71) Applicant: Huawei Technologies Co., Ltd., Longgang District, Shenzhen Guangdong 518129 (CN)
(72) Inventor: LI, Yan, Shenzhen Guangdong 518129 (CN); XIA, Xu, Shenzhen Guangdong 518129 (CN)
(74) Representative: Epping - Hermann - Fischer
(86) International application number: PCT/CN2009/074715
(87) International publication number: WO 2010/048895

(57) **Abstract**

A method and an apparatus for preauthorizing Quality of Service (QoS) in a roaming scenario are disclosed. The method includes: a first Policy and Charging Rules Function (PCRF) receives service information sent by an Application Function (AF), where the service information carries a QoS preauthorization indication; the first PCRF performs QoS preauthorization negotiation with a second PCRF; and the first PCRF sends a negotiation result to the AF. Therefore, the user session can be set up successfully without requiring the AF to deliver service information repeatedly for repeated QoS preauthorization.

## Description

This application claims priority to Chinese Patent Application No. 200810217506.2, filed with the Chinese Patent Office on October 30, 2008 and entitled "METHOD AND APPARATUS FOR PREAUTHORIZING QOS IN ROAMING SCENARIO", which is hereby incorporated by reference in its entirety.

### FIELD OF THE INVENTION

The present invention relates to communication technologies, and in particular, to a method and an apparatus for preauthorizing Quality of Service (QoS) in a roaming scenario.

### BACKGROUND OF THE INVENTION

While communication networks evolves to full Internet Protocol (IP)-based networks, end-to-end QoS needs to be accomplished to provide services that meet customer requirements. An IP network provides various services (such as multimedia call, file downloading, and webpage browse). Different services require different QoS (including bandwidth, delay, and packet loss ratio), and employ different charging rules (such as online charging, offline charging, traffic-based charging, or time-based charging).

In order to meet the above QoS and charging requirements, the 3rd Generation Partnership Project (3GPP) defines a Policy and Charging Control (PCC) architecture, which fulfills different QoS control and charging requirements.

The PCC architecture includes a Policy and Charging Rules Function (PCRF) and a Policy and Charging Enforcement Function (PCEF). A policy connection that serves user services need to be set up between the PCRF and multiple network entities such as PCEF and Bearer Binding and Event Report Function (BBERF) in the communication network so that users can have consistent end-to-end QoS experience of services in the communication network. The PCRF receives service information delivered by an Application Function (AF), and dynamically generates QoS and charging rules for a user service stream according to policies of an operator and subscription information of the user.

According to the prompt in the service information delivered by the AF, the PCRF performs QoS preauthorization for the service information delivered by the AF. In the preauthorization process, the PCRF does not formulate or execute PCC rules; and when the QoS preauthorization fails, the PCRF returns the currently acceptable QoS to the AF.

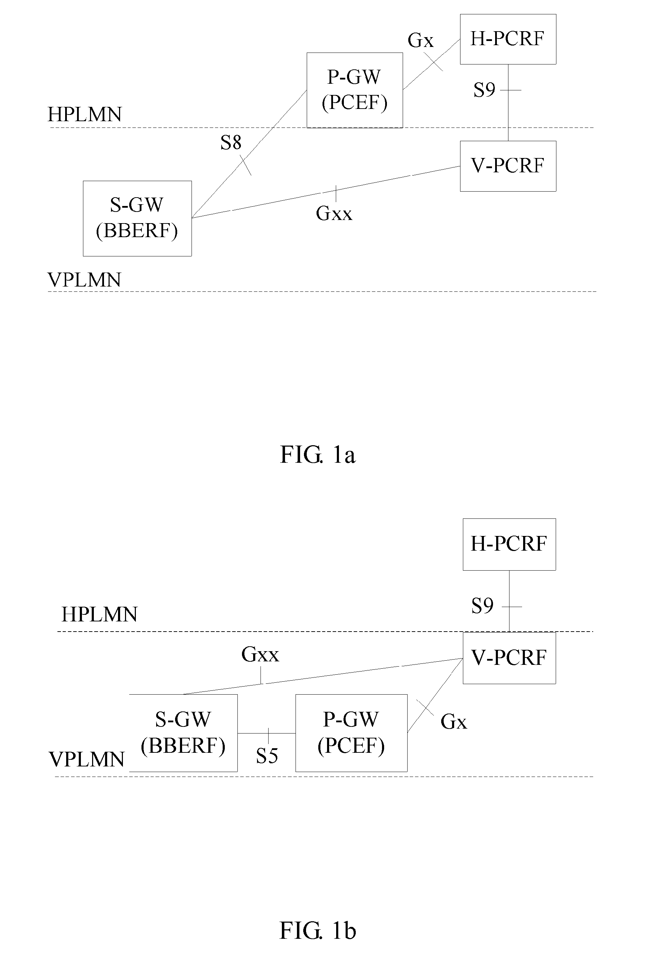

As shown in FIG. 1, the 3GPP TS 23.402 defines two roaming scenarios for the PCC architecture: Home Routed and Local Breakout. Home Routed means that a Packet Data Network Gateway (PGW) is located in a Home Public Land Mobile Network (HPLMN); and Local Breakout means that the PGW is located in a Visited Public Land Mobile Network (VPLMN). For roaming scenarios, the 3GPP defines a Home PCRF (H-PCRF) in the home domain and a Visited PCRF (V-PCRF) in the visited domain.

As regards the QoS preauthorization in R8, two authorization enforcement points exist: an H-PCRF, which preauthorizes the QoS according to user subscription and the policies of a home operator; and a V-PCRF, which preauthorizes QoS locally according to local policies.

The inventor of the present invention finds that in the existing network protocols, the AF may need to deliver service information repeatedly and perform repeated authorization, which increases the signaling directly exchanged between the AF and the PCRF and prolongs the session setup time; or, when either of the authorization enforcement points preauthorizes the QoS successfully, the user receives a QoS preauthorization success message and the implementation stage starts but if the other authorization enforcement point fails to authorize the QoS, the session for user session cannot be set up.

### SUMMARY OF THE INVENTION

The embodiments of the present invention provide a method and an apparatus for preauthorizing QoS in a roaming scenario. This enables a user session to be set up successfully without requiring the AF to deliver service information repeatedly for repeated QoS preauthorization.

A method for preauthorizing QoS in a roaming scenario includes:
receiving, by a first PCRF, service information sent by an AF, wherein the service information carries a QoS preauthorization indication;
performing, by the first PCRF, QoS preauthorization negotiation with a second PCRF; and
sending, by the first PCRF, a negotiation result to the AF.

An H-PCRF includes:
a receiving unit, configured to receive a QoS preauthorization result of a visited domain sent by a V-PCRF or service information sent by an AF;
a QoS preauthorizing unit, configured to perform QoS preauthorization according to the service information and generate a QoS preauthorization result of a home domain;
a preauthorization negotiating unit, configured to compare the QoS preauthorization result of the visited domain with the QoS preauthorization result of the home domain, and obtain authorized QoS information acceptable to both the H-PCRF and the V-PCRF; and
a sending unit, configured to send the authorized QoS information to the AF or send the preauthorization result of the home domain to the V-PCRF.

A V-PCRF includes:
a receiving unit, configured to receive a QoS preauthorization result of a home domain sent by an H-PCRF or service information sent by an AF;
a QoS preauthorizing unit, configured to perform QoS preauthorization according to the information received by the receiving unit and generate a QoS preauthorization result of a visited domain;
a preauthorization negotiating unit, configured to compare the QoS preauthorization result of the visited domain with the QoS preauthorization result of the home domain, and obtain authorized QoS information acceptable to both the H-PCRF and the V-PCRF; and
a sending unit, configured to send the authorized QoS information to the AF or send the preauthorization result of the visited domain to the H-PCRF.

In the embodiments of the present invention, QoS preauthorization negotiation is performed for the home domain and the visited domain so that user sessions can be set up successfully without requiring the AF to deliver service information repeatedly for repeated QoS preauthorization.

### BRIEF DESCRIPTION OF THE DRAWINGS

FIGs. 1A and 1B show a roaming scenario of a PCC architecture;
FIG. 2 is a flow chart showing how a PCRF preauthorizes QoS for service information;
FIG. 3 is a flow chart of an embodiment of the present invention;
FIG. 4 is a flow chart of another embodiment of the present invention;
FIG. 5 is a flow chart of another embodiment of the present invention;
FIG. 6 is a flow chart of another embodiment of the present invention;
FIG. 7 is a flow chart of another embodiment of the present invention;
FIG. 8 shows an H-PCRF in an embodiment of the present invention; and
FIG. 9 shows a V-PCRF in an embodiment of the present invention.

### DETAILED DESCRIPTION OF THE EMBODIMENTS

In the R7 protocol, when a PCRF preauthorizes QoS for service information delivered by an AF, the preauthorization process includes the following steps:
Step 201: The AF receives a new session setup request sent by a User Equipment (UE).
Step 202: The AF transmits service information of the new session to the PCRF, and requests the PCRF to preauthorize QoS.
Step 203: The PCRF preauthorizes QoS for the service information according to the subscription information of the user and policies of an operator; and returns a success message if the preauthorization is successful, or returns a QoS value acceptable to the PCRF to the AF if the preauthorization fails.
Step 204: The AF adjusts the user session service information according to a preauthorization result returned by the PCRF, and sends a response to the UE.

The essence of the present invention is: setting up a negotiation mechanism between an H-PCRF and the V-PCRF in the preauthorization stage, comparing the preauthorization result of one preauthorization enforcement point with the preauthorization result of the other preauthorization enforcement point, and returning the negotiation result to the AF.

The present invention is expounded below with reference to accompanying drawings and exemplary embodiments.

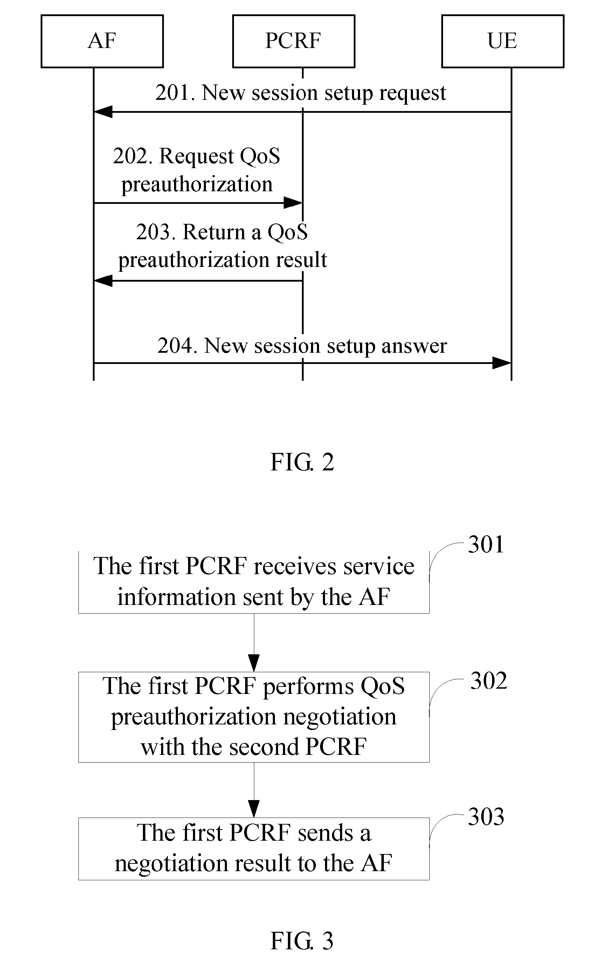

As shown in FIG. 3, an embodiment of the present invention includes the following steps:
Step 301: A first PCRF receives service information sent by an AF, where the service information carries a QoS preauthorization indication.
Step 302: The first PCRF performs QoS preauthorization negotiation with a second PCRF.
Step 303: The first PCRF sends a negotiation result to the AF.

It should be noted that when the AF is located in the home domain, the first PCRF is an H-PCRF, and the second PCRF is a V-PCRF; when the AF is located in the visited domain, the first PCRF is a V PCRF, and the second PCRF is an H-PCRF. The H-PCRF preauthorization is home domain preauthorization, and the V-PCRF preauthorization is visited domain preauthorization.

It should be noted that the preauthorization indication may be a parameter defined in the following way:
Preliminary-indicator ::= <AVP Header: xxxx >

This parameter indicates preauthorization of QoS rather than execution of PCC rules.

It should be noted that the method and the process for the H-PCRF or V-PCRF to preauthorize QoS may be based on the procedure and the algorithm specified in the protocols, and are not the emphasis of the present invention. The present invention puts forward a mechanism of coordinating QoS preauthorization to unify two preauthorization results.

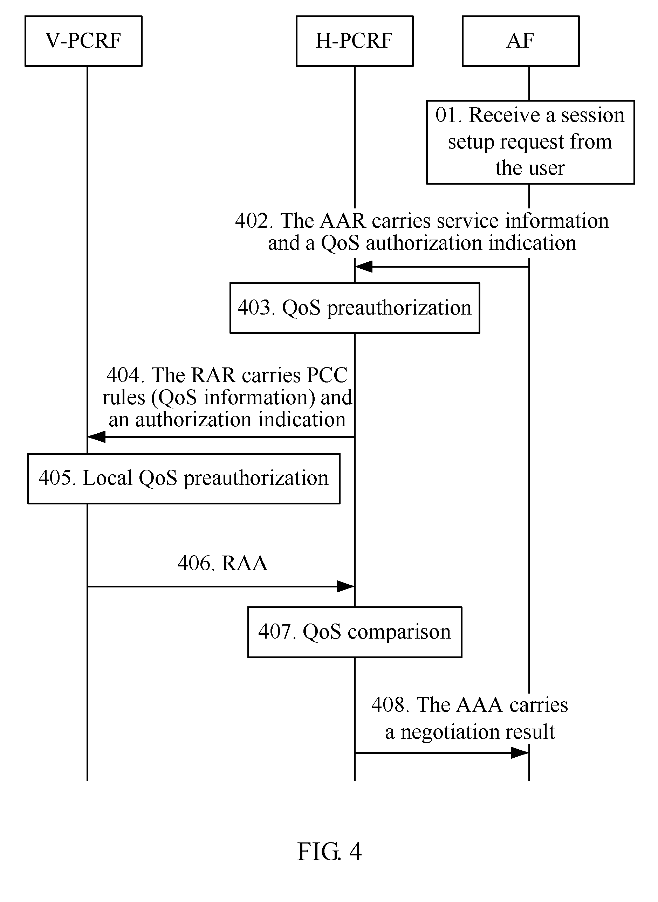

As shown in FIG. 4, another embodiment of the present invention deals with the process of preauthorizing QoS when an AF is located in a home domain. The process includes the following steps:
Step 401: The AF receives a session setup request sent by a user. The request triggers the AF to deliver service information to a corresponding H-PCRF in the home domain. The service information includes a preauthorization indication.
Step 402: The AF sends an Authentication Authorization Request (AAR) command that carries the service information to the H-PCRF.
Step 403: The H-PCRF receives the AAR command, extracts the service information, and preauthorizes QoS and formulates PCC rules according to subscription data of the user and policies of an operator. If the H-PCRF succeeds in preauthorizing QoS, the preauthorization result is QoS required by the service information; if the H-PCRF fails to preauthorize the QoS, the H-PCRF generates a preauthorized QoS acceptable to the H-PCRF (namely, first QoS), and, accordingly, the preauthorization result is the QoS required by the service information or the first QoS generated by the H-PCRF. The preauthorization result may be carried in PCC rules. The preauthorization indication included in the service information indicates that the PCC rules are formulated by the H-PCRF, but not delivered to the gateway for executing.
Step 404: The H-PCRF adds the PCC rules and the preauthorization indication in a Re-Authentication Request (RAR) command, and sends the RAR command to the V-PCRF in the area visited by the user.
Step 405: The V-PCRF extracts the PCC rules from the RAR command, learns the QoS information and the preauthorization indication included in the PCC rules, and preauthorizes QoS locally according to local policies. If the V-PCRF succeeds in preauthorizing QoS, the V-PCRF generates a success message; if the V-PCRF fails to preauthorize QoS, the V-PCRF generates preauthorized QoS acceptable to the V-PCRF (namely, second QoS). It should be noted that due to existence of the preauthorization indication, the V-PCRF does not deliver the PCC rules to the gateway for executing even if the V-PCRF succeeds in preauthorizing QoS locally.
Step 406: The V-PCRF returns a Re-Authentication Answer (RAA) command to the H-PCRF. The RAA command carries a QoS preauthorization result of the V-PCRF, including a success message or second QoS.
Step 407: The H-PCRF receives the RAA command, obtains the QoS preauthorization result of the V-PCRF, and compares the results of the two preauthorization enforcement points to obtain a negotiation result. The comparison process includes: if both the H-PCRF and the V-PCRF fail to preauthorize the QoS, comparing the first QoS and the second QoS, and using the lower QoS as a negotiation result; if both the H-PCRF and the V-PCRF succeed in preauthorizing the QoS, the negotiation result is success of preauthorizing QoS for service information; if either H-PCRF or V-PCRF fails to preauthorize the QoS, using the QoS generated by the failing PCRF as the negotiation result.
Step 408: The H-PCRF sends an Authentication Authorization Answer (AAA) command that carries the negotiation result to the AF. The AF performs an operation for the session setup request from the user according to the negotiation result.

It should be noted that according to step 403, when the H-PCRF fails to preauthorize the QoS, the QoS information included in the PCC rules in step 305 is the QoS required by the service information or the first QoS.

When the QoS information included in the PCC rules is the QoS required by the service information, the V-PCRF extracts the QoS from the service information, and preauthorizes QoS according to the local policies. If the preauthorization fails, the V-PCRF generates second QoS. When receiving the second QoS returned by the V-PCRF, the H-PCRF compares the first QoS and the second QoS, and uses the lower QoS as a negotiation result.

When the QoS information included in the PCC rules is the first QoS generated by the H-PCRF, the V-PCRF extracts the first QoS and preauthorizes it according to the local policies. If the preauthorization fails, the V-PCRF generates second QoS. Because the V-PCRF preauthorizes the first QoS, when the H-PCRF receives the second QoS returned by the V-PCRF, the H-PCRF does not need to compare the first QoS with the second QoS, but directly knows that the second QoS is lower than the first QoS, and uses the second QoS as the negotiation result.

It should be noted that after the H-PCRF receives the service information sent by the AF and preauthorizes the QoS, the H-PCRF may add an Attribute Value Pair (AVP) parameter into the RAR command to carry the QoS information and the preauthorization indication. Specifically, when the H-PCRF succeeds in preauthorizing the QoS, the QoS information is the QoS required by the user service; when the H-PCRF fails to preauthorize the QoS, the QoS information is the first QoS generated by the H-PCRF or the QoS required by the user service. The format of the AVP is:
Preliminary-Service ::= < AVP Header: xxxx >
[QoS-Information]

"QoS-Information" above represents the QoS carried in the AVP indication.

After receiving the AVP indication carried in the RAR command, the V-PCRF extracts the QoS from the AVP indication, and preauthorizes the QoS according to the local policies. In this embodiment, a new method of carrying the preauthorization result of the H-PCRF is put forward, and the subsequent steps are the same.

This embodiment provides a method for preauthorizing QoS when the AF is located in the home domain. The H-PCRF compares QoS preauthorization results of the two enforcement points, and returns the negotiation result to the AF. The negotiation result is the QoS acceptable to both of the preauthorization enforcement points or a message indicating preauthorization success for service information. Therefore, the user session can be set up successfully without requiring the AF to deliver service information to the two preauthorization enforcement points repeatedly.

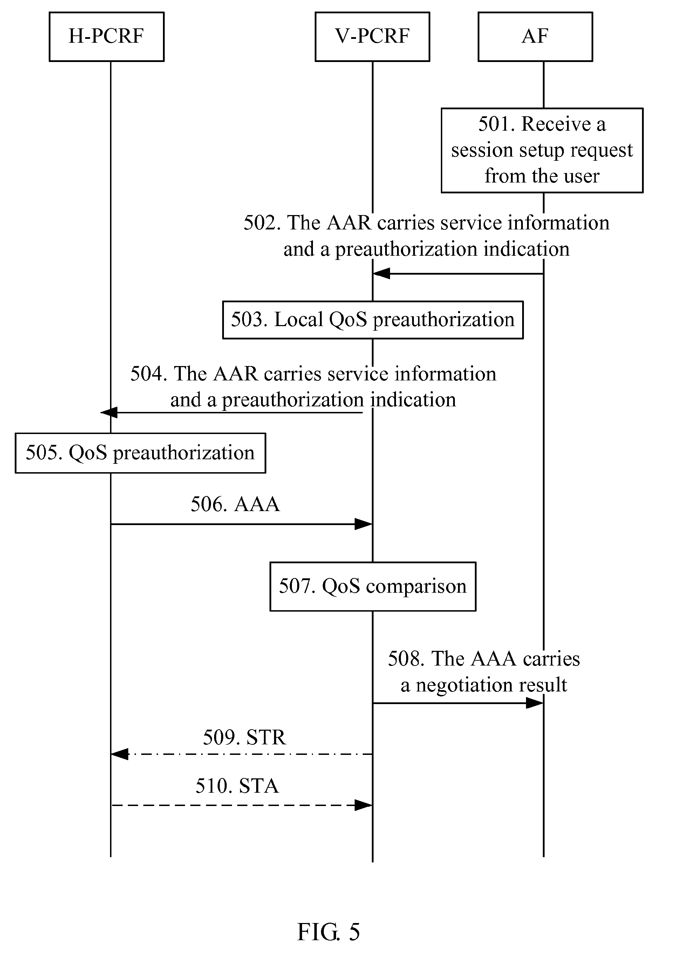

As shown in FIG. 5, another embodiment of the present invention deals with the process of preauthorizing QoS when an AF is located in a visited domain. The process includes the following steps:
Steps 501: The AF in the visited domain receives a session setup request sent by a user. The request triggers the AF to deliver service information to a corresponding V PCRF in the visited domain.
Step 502: The AF sends an AAR command that carries the service information to the V-PCRF. The service information includes a preauthorization indication.
Step 503: The V-PCRF receives the AAR command, and preauthorizes QoS for the service information according to local policies. If the preauthorization fails, the V-PCRF generates preauthorized QoS acceptable to the V-PCRF (namely, second QoS); if the preauthorization succeeds, the V-PCRF forwards the AAR command to an H-PCRF.

It should be noted that the preauthorization process in this step may also be performed in step 507.
Step 504: The V-PCRF forwards the service information of the AF to the H-PCRF in the home domain of the user through an AAR command.
Step 505: The H-PCRF learns the service information carried in the AAR command, and preauthorizes QoS in the home domain according to subscription information of the user and policies of an operator. If the preauthorization fails, the H-PCRF generates preauthorized QoS acceptable to the H-PCRF (namely, first QoS); if the preauthorization succeeds, the H-PCRF generates a success message.
Step 506: The H-PCRF returns an AAA command that carries the QoS preauthorization result of the home domain to the V-PCRF.
Step 507: The V-PCRF receives the AAA command, obtains the QoS preauthorization result of the home domain, and compares the results of two preauthorization enforcement points to obtain a negotiation result. The comparison process includes: if both the H-PCRF and the V-PCRF fail to preauthorize the QoS, comparing the first QoS and the second QoS, and using the lower QoS as a negotiation result; if both the H-PCRF and the V-PCRF succeed in preauthorizing the QoS, the negotiation result is success of preauthorizing QoS for service information; if either H-PCRF or V-PCRF fails in preauthorizing the QoS, using the QoS generated by the failing PCRF as the negotiation result.
Step 508: The V-PCRF sends an AAA command that carries the negotiation result to the AF.

If the H-PCRF succeeds in preauthorizing the QoS, the H-PCRF saves session setup information; if the V-PCRF fails in preauthorizing the QoS, the session setup information is invalid and needs to be deleted. In this case, the process further includes the following steps:
Step 509: The V-PCRF sends a Session Termination Request (STR) command to the H-PCRF, instructing the H-PCRF to delete the session setup information.
Step 510: The H-PCRF deletes the session setup information, and returns a Session Termination Answer (STA) command.

This embodiment provides a method of coordinating QoS preauthorization when the AF is located in the visited domain. The V-PCRF compares QoS preauthorization results of the two enforcement points, and returns the negotiation result to the AF. The negotiation result is the QoS acceptable to both of the preauthorization enforcement points or a message indicating preauthorization success for service information. Therefore, the user session can be set up successfully without requiring the AF to deliver service information to the two preauthorization enforcement points repeatedly.

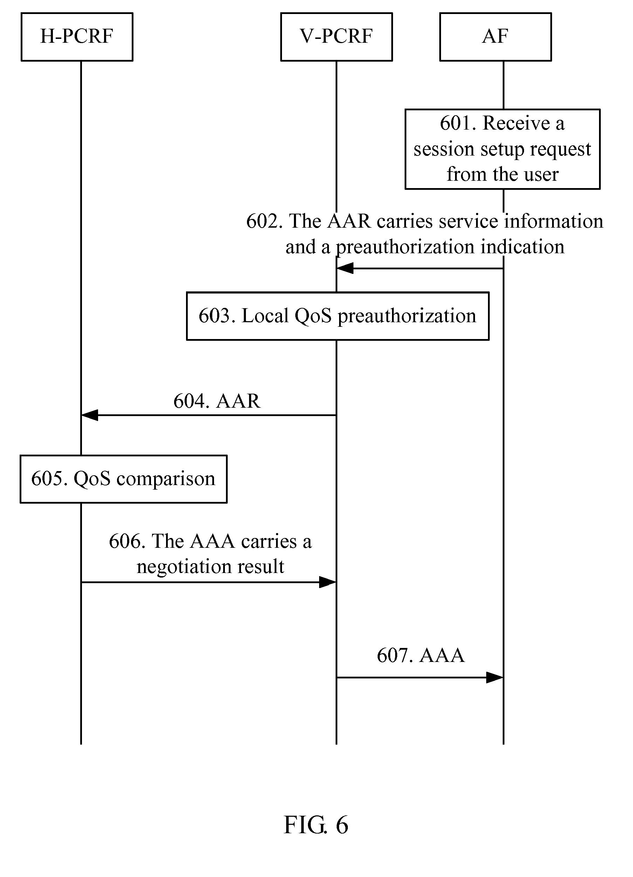

As shown in FIG. 6, another embodiment of the present invention provides a method for preauthorizing QoS when an AF is located in a visited domain. The method includes the following steps:
Steps 601: The AF in the visited domain receives a session setup request sent by a user. The request triggers the AF to deliver service information to a corresponding V-PCRF in the visited domain.
Step 602: The AF sends an AAR command that carries the service information to the V-PCRF. The service information includes a preauthorization indication.
Step 603: The V-PCRF receives the AAR command, extracts the service information, and preauthorizes QoS according to local policies. If the preauthorization fails, the V-PCRF generates a preauthorized QoS acceptable to the V-PCRF (namely, second QoS); if the preauthorization succeeds, the V-PCRF forwards the AAR command to an H-PCRF.

It should be noted that the second QoS generated after the V-PCRF fails to preauthorize the QoS may be carried in an Acceptable-Service-Info parameter added in the AAR command. Through the Acceptable-Service-Info parameter, the PCRF returns the acceptable QoS to the AF. In this embodiment, the Acceptable-Service-Info parameter is reused for the V-PCRF to report the acceptable QoS to the H-PCRF.
Step 604: The V-PCRF sends an AAR command to the H-PCRF. The AAR command carries the service information sent by the AF and a preauthorization result of the V-PCRF (if this result is not carried in the AAR command, it indicates that the V-PCRF preauthorizes the QoS successfully).
Step 605: The H-PCRF receives the AAR command, extracts the service information, and preauthorizes the QoS according to subscription data of the user and policies of an operator. If the preauthorization fails, the H-PCRF generates a preauthorized QoS acceptable to the H-PCRF (namely, first QoS); if the preauthorization succeeds, the H-PCRF generates a success message. The H-PCRF compares the results of two preauthorization enforcement points to obtain a negotiation result. The comparison process includes: if both the H-PCRF and the V-PCRF fail to preauthorize the QoS, comparing the first QoS and the second QoS, and using the lower QoS as a negotiation result; if both H-PCRF and V-PCRF succeed in preauthorizing the QoS, the negotiation result is success of preauthorizing QoS for service information; if either H-PCRF or V-PCRF fails to preauthorize the QoS, using the QoS generated by the failing PCRF as the negotiation result.
Step 606: The H-PCRF sends an AAA command that carries the negotiation result to the V-PCRF.
Step 607: The V-PCRF forwards the negotiation result to the AF.

It should be noted that in step 604, when the V-PCRF preauthorizes the QoS successfully, the preauthorization result of the V-PCRF may be a success message generated by the V-PCRF, and the success message is used to notify the H-PCRF of the QoS preauthorization success in the visited domain.

This embodiment provides a method of preauthorizing QoS when the AF is located in the visited domain. The H-PCRF compares QoS preauthorization results of two enforcement points, and returns the negotiation result to the V-PCRF. The V-PCRF sends the negotiation result to the AF. Therefore, the user session can be set up successfully without requiring the AF to deliver service information to the two preauthorization enforcement points repeatedly.

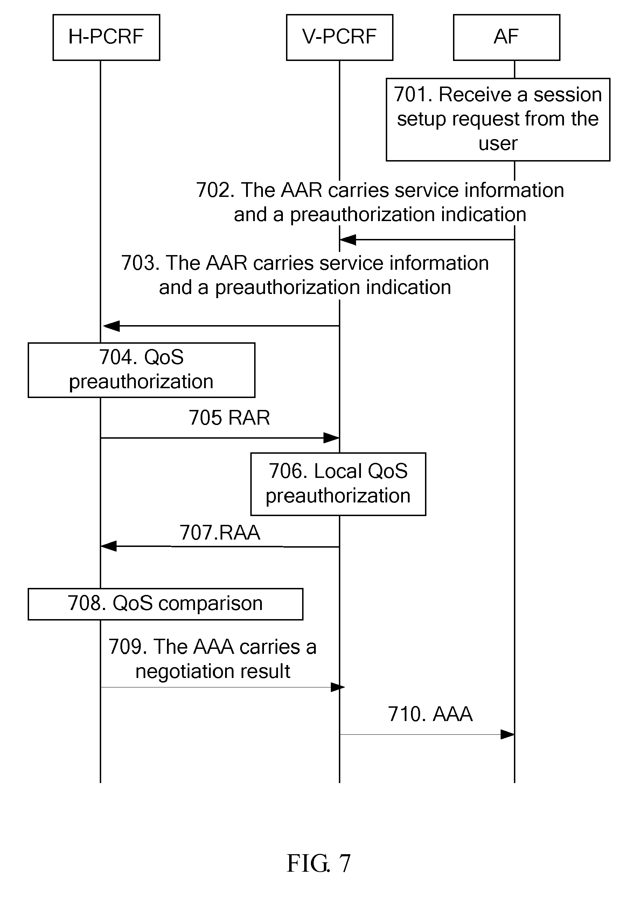

As shown in FIG. 7, another embodiment of the present invention deals with the process of preauthorizing QoS when an AF is located in a visited domain. The process includes the following steps:
Steps 701: The AF in the visited domain receives a session setup request sent by a user. The request triggers the AF to deliver service information to a corresponding V-PCRF in the visited domain.
Step 702: The AF sends an AAR command that carries the service information to the V-PCRF. The service information includes a preauthorization indication.
Step 703: The V-PCRF sends an AAR command to an H-PCRF. The AAR command carries the service information sent by the AF.
Step 704: The H-PCRF receives the AAR command, extracts the service information, and preauthorizes the QoS according to subscription data of the user and policies of an operator. The H-PCRF in this step sends a preauthorization result to the V-PCRF in the same way as that illustrated in FIG. 4. The preauthorization result is sent in two modes: The formulated PCC rules carry the preauthorization result, or a new AVP indication is defined to carry the preauthorization result. When the H-PCRF succeeds in preauthorizing the QoS, the preauthorization result is the QoS required by the service information; when the H-PCRF fails to preauthorize the QoS, the preauthorization result is the first QoS generated by the H-PCRF or the QoS required by the service information.
Step 705: The H-PCRF sends an RAR command to the V-PCRF. The RAR command carries a preauthorization result of the home domain and a preauthorization indication. The preauthorization result of the home domain may be carried in the PCC rules or an AVP indication.
Step 706: The V-PCRF learns the QoS included in the RAR command, and preauthorizes the QoS according to local policies. If the preauthorization fails, the V-PCRF generates a preauthorized QoS acceptable to the V-PCRF (namely, second QoS); if the preauthorization succeeds, the V-PCRF generates a success message.
Step 707: The V-PCRF sends an RAA command that carries the preauthorization result of the V-PCRF to the H-PCRF.
Step 708: The H-PCRF receives the preauthorization result of the V-PCRF, and compares the results of two preauthorization enforcement points to obtain a negotiation result. The comparison process includes: if both the H-PCRF and the V-PCRF fail to preauthorize the QoS, comparing the first QoS and the second QoS, and using the lower QoS as a negotiation result; if both the H-PCRF and the V-PCRF succeed in preauthorizing the QoS, the negotiation result is success of preauthorizing QoS for service information; if either H-PCRF or V-PCRF fails to preauthorize the QoS, using the QoS generated by the failing PCRF as the negotiation result.
Step 709: The H-PCRF sends an AAA command that carries the negotiation result to the V-PCRF.
Step 710: The V-PCRF sends an AAA command that carries the negotiation result to the AF.

It should be noted that according to step 704, when the H-PCRF fails to preauthorize the QoS, the QoS information included in the home domain preauthorization result in step 705 is the QoS required by the service information or the first QoS.

When the QoS information included in the home domain preauthorization result is the QoS required by the service information, the V-PCRF extracts the QoS from the service information, and preauthorizes QoS according to local policies. If the preauthorization fails, the V-PCRF generates second QoS. When receiving the second QoS returned by the V-PCRF, the H-PCRF compares the first QoS and the second QoS, and uses the lower QoS as the negotiation result.

When the QoS information included in the home domain preauthorization result is the first QoS generated by the H-PCRF, the V-PCRF extracts the first QoS and preauthorizes it according to the local policies. If the preauthorization fails, the V-PCRF generates second QoS. Because the V-PCRF preauthorizes the first QoS, when the H-PCRF receives the second QoS returned by the V-PCRF, the H-PCRF does not need to compare the first QoS with the second QoS, but directly knows that the second QoS is lower than the first QoS, and uses the second QoS as the negotiation result.

This embodiment provides a method for preauthorizing QoS when the AF is located in the visited domain. The H-PCRF sends the preauthorization result of the home domain to the V-PCRF, and the V-PCRF preauthorizes the QoS. The H-PCRF compares preauthorization results of the two preauthorization enforcement points, and returns the negotiation result to the V-PCRF. The V-PCRF sends the negotiation result to the AF, thus finishing the preauthorization process. After the two preauthorizations are coordinated and unified, a preauthorization result is output. Therefore, the user session can be set up successfully without requiring the AF to authorize the QoS repeatedly.

Corresponding to the embodiments of the methods above, an H-PCRF and a V-PCRF are provided in the present invention.

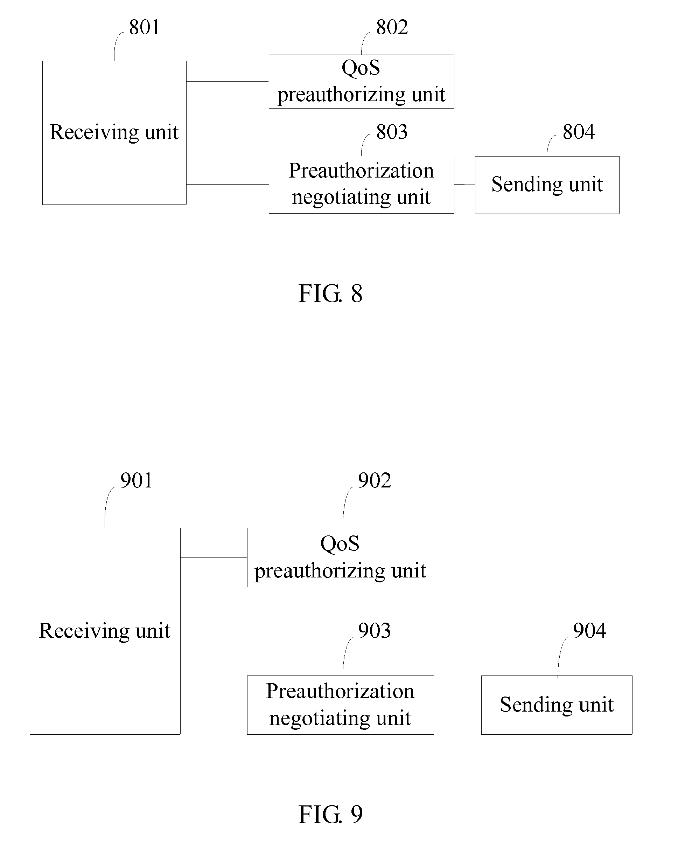

As shown in FIG. 8, an H-PCRF includes:
a receiving unit 801, configured to receive a QoS preauthorization result of the visited domain sent by a V-PCRF or service information sent by an AF;
a QoS preauthorizing unit 802, configured to perform QoS preauthorization according to the service information and generate a QoS preauthorization result of the home domain;
a preauthorization negotiating unit 803, configured to compare the QoS preauthorization result of the visited domain with the QoS preauthorization result of the home domain, and obtain authorized QoS information acceptable to both the H-PCRF and the V-PCRF; and
a sending unit 804, configured to send the authorized QoS information to the AF or send the preauthorization result of the home domain to the V-PCRF.

As shown in FIG. 9, a V-PCRF includes:
a receiving unit, configured to receive a QoS preauthorization result of the home domain sent by an H-PCRF or service information sent by an AF;
a QoS preauthorizing unit, configured to perform QoS preauthorization according to the information received by the receiving unit and generate a QoS preauthorization result of the visited domain;
a preauthorization negotiating unit, configured to compare the QoS preauthorization result of the visited domain with the QoS preauthorization result of the home domain, and obtain authorized QoS information acceptable to both the H-PCRF and the V-PCRF; and
a sending unit, configured to send the authorized QoS information to the AF or send the preauthorization result of the visited domain to the H-PCRF.

In the embodiments of the present invention, QoS preauthorization negotiation is performed for the home domain and the visited domain so that the user session can be set up successfully without requiring the AF to deliver service information repeatedly for repeated QoS preauthorization.

In conclusion, by using the method and the apparatus for preauthorizing QoS in the embodiments of the present invention, the QoS preauthorization performed by the H-PCRF is coordinated with the QoS preauthorization performed by the V-PCRF, the results of the two preauthorizations are compared to obtain a negotiation result, which is the QoS acceptable to both of the preauthorization enforcement points or a message indicating preauthorization success for service information, and the negotiation result is sent to the AF. This method makes it unnecessary for the AF to deliver service information repeatedly for repeated QoS preauthorization, and reduces the signaling exchanged between the AF and the PCRF. Because the negotiation result is acceptable to both the H-PCRF and the V-PCRF, after the AF instructs the user to set up a session according to the negotiation result, the session can go on successfully and is not interrupted due to authorization failure.

Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for preauthorizing Quality of Service, QoS, in a roaming scenario, comprising:
receiving, by a first Policy and Charging Rules Function, PCRF, service information sent by an Application Function, AF, wherein the service information carries a QoS preauthorization indication;
performing, by the first PCRF, QoS preauthorization negotiation with a second PCRF; and
sending, by the first PCRF, a negotiation result to the AF.

2. The method according to claim 1, wherein: when the first PCRF is a Home PCRF, H-PCRF, and the second PCRF is a Visited PCRF, V-PCRF, the performing, by the first PCRF, QoS preauthorization negotiation with the second PCRF, comprises:
preauthorizing, by the H-PCRF, QoS in a home domain according to user subscription, policies of an operator, and the received service information;
sending, by the H-PCRF, a QoS preauthorization result of the home domain to the V-PCRF, wherein the QoS preauthorization result of the home domain carries QoS information and a preauthorization indication, and the QoS information comprises a QoS value required by the service information or a QoS value preauthorized by the H-PCRF;
preauthorizing, by the V-PCRF, QoS in a visited domain according to the received QoS preauthorization result of the home domain, and sending a QoS preauthorization result of the visited domain to the H-PCRF; and
comparing, by the H-PCRF, the QoS preauthorization result of the home domain with the received QoS preauthorization result of the visited domain, and obtaining authorized QoS information acceptable to both the H-PCRF and the V-PCRF.

3. The method according to claim 2, wherein the sending, by the first PCRF, a negotiation result to the AF, comprises:
sending, by the first PCRF, the authorized QoS information to the AF.

4. The method according to claim 2, wherein:
the H-PCRF compares the QoS preauthorization result of the home domain with the received QoS preauthorization result of the visited domain and obtains the authorized QoS information acceptable to both the H-PCRF and the V-PCRF in the following way:
if the H-PCRF succeeds in preauthorizing the QoS and the V-PCRF succeeds in preauthorizing the QoS, the authorized QoS information is a message indicating preauthorization success for the service information;
if the H-PCRF succeeds in preauthorizing the QoS and the V-PCRF fails to preauthorize the QoS, the authorized QoS information is a QoS value preauthorized by the V-PCRF;
if the H-PCRF fails to preauthorize the QoS and the V-PCRF succeeds in preauthorizing the QoS, the authorized QoS information is the QoS value preauthorized by the H-PCRF; or
if the H-PCRF fails to preauthorize the QoS and the V-PCRF fails to preauthorize the QoS, the authorized QoS information is the QoS value preauthorized by the H-PCRF or a QoS value preauthorized by the V-PCRF, whichever is the lower.

5. The method according to claim 1, wherein:
when the first PCRF is a Visited PCRF, V-PCRF, and the second PCRF is a Home PCRF, H-PCRF, the performing, by the first PCRF, QoS preauthorization negotiation with the second PCRF, comprises:
forwarding, by the V-PCRF, the service information to the H-PCRF;
preauthorizing, by the V-PCRF, QoS in a visited domain, and sending a QoS preauthorization result of the visited domain to the H-PCRF;
preauthorizing, by the H-PCRF, QoS in a home domain according to user subscription, policies of an operator, and the service information forwarded by the V-PCRF; and
comparing, by the H-PCRF, the QoS preauthorization result of the home domain with the received QoS preauthorization result of the visited domain, obtaining authorized QoS information acceptable to both the H-PCRF and the V-PCRF, and returning the authorized QoS information to the V-PCRF.

6. The method according to claim 5, wherein:
the H-PCRF compares the QoS preauthorization result of the home domain with the received QoS preauthorization result of the visited domain and obtains the authorized QoS information acceptable to both the H-PCRF and the V-PCRF in the following way:
if the H-PCRF succeeds in preauthorizing the QoS and the V-PCRF succeeds in preauthorizing the QoS, the authorized QoS information is a message indicating preauthorization success for the service information;
if the H-PCRF succeeds in preauthorizing the QoS and the V-PCRF fails to preauthorize the QoS, the authorized QoS information is a QoS value preauthorized by the V-PCRF;
if the H-PCRF fails to preauthorize the QoS and the V-PCRF succeeds in preauthorizing the QoS, the authorized QoS information is a QoS value preauthorized by the H-PCRF; or
if the H-PCRF fails to preauthorize the QoS and the V-PCRF fails to preauthorize the QoS, the authorized QoS information is a QoS value preauthorized by the H-PCRF or a QoS value preauthorized by the V-PCRF, whichever is the lower.

7. The method according to claim 1, wherein: when the first PCRF is a Visited PCRF, V-PCRF, and the second PCRF is a Home PCRF, H-PCRF, the performing, by the first PCRF, QoS preauthorization negotiation with the second PCRF, comprises:
preauthorizing, by the V-PCRF, QoS in a visited domain according to the received service information and local policies;
sending, by the V-PCRF, the service information to the H-PCRF;
preauthorizing, by the H-PCRF, QoS in a home domain according to user subscription, policies of an operator, and the service information forwarded by the V-PCRF, and sending a QoS preauthorization result of the home domain to the V-PCRF; and
comparing, by the V-PCRF, the QoS preauthorization result of the visited domain with the received QoS preauthorization result of the home domain, and obtaining authorized QoS information acceptable to both the H-PCRF and the V-PCRF.

8. The method according to claim 7, wherein: the V-PCRF compares the QoS preauthorization result of the visited domain with the received home domain QoS preauthorization result of the home domain and obtains the authorized QoS information acceptable to both the H-PCRF and the V-PCRF in the following way:
if the H-PCRF succeeds in preauthorizing the QoS and the V-PCRF succeeds in preauthorizing the QoS, the authorized QoS information is a message indicating preauthorization success for the service information;
if the H-PCRF succeeds in preauthorizing the QoS and the V-PCRF fails to preauthorize the QoS, the authorized QoS information is a QoS value preauthorized by the V-PCRF;
if the H-PCRF fails to preauthorize the QoS and the V-PCRF succeeds in preauthorizing the QoS, the authorized QoS information is a QoS value preauthorized by the H-PCRF; or
if the H-PCRF fails to preauthorize the QoS and the V-PCRF fails to preauthorize the QoS, the authorized QoS information is a QoS value preauthorized by the H-PCRF or a QoS value preauthorized by the V-PCRF, whichever is the lower.

9. The method according to claim 8, wherein: if the H-PCRF succeeds in preauthorizing the QoS and the V-PCRF fails to preauthorize the QoS, the method further comprises:
releasing an AF session set up by the H-PCRF.

10. The method according to claims 5-9, wherein the sending, by the first PCRF, a negotiation result to the AF, comprises:
the V-PCRF sends the authorized QoS information to the AF.

11. A Home Policy and Charging Rules Function, H-PCRF, comprising:
a receiving unit, configured to receive Quality of Service, QoS, preauthorization result of a visited domain sent by a Visited Policy and Charging Rules Function, V-PCRF, or service information sent by an Application Function, AF;
a QoS preauthorizing unit, configured to perform QoS preauthorization according to the service information and generate a QoS preauthorization result of a home domain;
a preauthorization negotiating unit, configured to compare the QoS preauthorization result of the visited domain with the QoS preauthorization result of the home domain, and obtain authorized QoS information acceptable to both the H-PCRF and the V-PCRF; and
a sending unit, configured to send the authorized QoS information to the AF or send the preauthorization result of the home domain to the V-PCRF.

12. A Visited Policy and Charging Rules Function, V-PCRF, comprising:
a receiving unit, configured to receive a Quality of Service, QoS, preauthorization result of a home domain sent by a Home Policy and Charging Rules Function, H-PCRF, or service information sent by an Application Function, AF;
a QoS preauthorizing unit, configured to perform QoS preauthorization according to the information received by the receiving unit and generate a QoS preauthorization result of a visited domain;
a preauthorization negotiating unit, configured to compare the QoS preauthorization result of the visited domain with the QoS preauthorization result of the home domain, and obtain authorized QoS information acceptable to both the H-PCRF and the V-PCRF; and
a sending unit, configured to send the authorized QoS information to the AF or send the preauthorization result of the visited domain to the H-PCRF.
